(19) Europäisches Patentamt / European Patent Office / Office européen des brevets

(11) EP 3 615 213 B1

(12) **EUROPEAN PATENT SPECIFICATION**

(45) Date of publication and mention of the grant of the patent:
**02.06.2021 Bulletin 2021/22**

(21) Application number: **18723340.8**

(22) Date of filing: **25.04.2018**

(51) Int Cl.:
***B01J 41/07*** *(2017.01)* ***C13B 20/12*** *(2011.01)*
***C13B 20/14*** *(2011.01)*

(86) International application number:
**PCT/US2018/029293**

(87) International publication number:
**WO 2018/200629 (01.11.2018 Gazette 2018/44)**

(54) **TREATMENT OF SUGAR SOLUTIONS**

BEHANDLUNG VON ZUCKERLÖSUNGEN

TRAITEMENT DE SOLUTIONS DE SUCRES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.04.2017 US 201762491407 P**

(43) Date of publication of application:
**04.03.2020 Bulletin 2020/10**

(73) Proprietors:
- **Dow Global Technologies LLC**
  **Midland, MI 48674 (US)**
- **Rohm and Haas Company**
  **Collegeville, PA 19426 (US)**

(72) Inventors:
- **DEAR, Joshua**
  **Collegeville, PA 19426 (US)**
- **GISCH, Daryl J.**
  **Midland, MI 47674 (US)**
- **MARTIN, Collin H.**
  **Collegeville, PA 19426 (US)**
- **PEASE, Stephen**
  **Collegeville, PA 19426 (US)**
- **THOMAS, Ryan**
  **Collegeville, PA 19426 (US)**
- **WANG, Hongzhi**
  **Collegeville, PA 19426 (US)**

(74) Representative: **Houghton, Mark Phillip**
**Patent Outsourcing Limited**
**Cornerhouse**
**1 King Street**
**Bakewell**
**Derbyshire DE45 1DZ (GB)**

(56) References cited:
**EP-A1- 0 481 603** **WO-A1-2008/056331**
**US-A- 4 587 953** **US-A1- 2010 006 091**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

In processes for refining sugars, it is often desired to treat aqueous solutions that contain one or more monosaccharides in order to remove substances that impart color. One way to remove color is to pass the aqueous solution through a bed of adsorbent particles, allowing the colored substances to become adsorbed onto the particles. When such a method is used, after some period of operation, the adsorbent particles are regenerated; that is, most or all of the adsorbed colored substances are removed from the adsorbent particles, so that the adsorbent particles can be re-used for removing colored substances from solutions.

In the past, it has been common to use activated carbon particles as the adsorbent particles for removing colored substances from sugar solutions. Activated carbon is known to be effective at removing colored substances from sugar solutions. Common forms of activated carbon particles are powdered activated carbon and granular activated carbon. Despite the effectiveness of activated carbon at removing colored substances, the use of activated carbon particles has several drawbacks. Powdered activated carbon is commonly used by mixing the particles of carbon with the sugar solution in a stirred tank, and, after separating the carbon particles from the mixture, discarding the carbon particles after a single use. This method creates a large waste stream of used carbon. Granular activated carbon is commonly used by placing the carbon particles in a column and passing the sugar solution through the column. Periodically, the carbon is regenerated by heating the carbon particles to high temperature in a furnace. This method requires a large capital expense to install the furnace, requires high operating costs to run the furnace, and causes the loss of 3 to 10% of the carbon during each regeneration cycle. Thus the use of activated carbon has significant drawbacks, regardless of whether the powdered form or the granular form is used.

It is desired to provide a process for removing colored substances that significantly decreases one or more of the drawbacks of using carbon for removal of colored substances, while taking advantage of the effectiveness of activated carbon for removal of colored substances. It has been discovered that the sugar solution can be brought into contact with certain adsorbent resin particles prior to contact of the sugar solution with activated carbon. In such a procedure, it is also desirable that the adsorbent resin particles can be regenerated, and it is desirable that, after regeneration, the adsorbent resin particles can be re-used for removing colored substances. It is also desired that the adsorbent resin particles show good osmotic stability.

US 6,942,805 describes a process for decolorizing sugar juices by means of monodisperse ion exchangers, preferably anion exchangers, and the use of the same for sugar juice decolorization. US 4,587,953 describes a process for treating an aqueous solution, wherein the aqueous solution comprises dissolved sugar solids, the process comprising (a) passing fructose or dextrose syrup through a bed containing a cation exchange resin, wherein the effluent from said cation exchange resin bed has a pH of from 2.0 to 2.5; (b) passing the effluent of said cation exchange resin through a bed containing activated carbon, thereby adsorbing weak organic acids and other fructose syrup impurities; (c) passing the effluent from said activated carbon bed through a bed containing an anion or a mixed cation-anion exchange resin. It is desired to provide an improved process for removing colored substances from sugar solutions.

The following is a statement of the invention.

A first aspect of the present invention is a process for treating an aqueous solution according to claim 1.

The following is a brief description of the drawing.

Fig. 1 shows a flow chart for an example of a starch processing process. The portion in brackets represents the process of the present invention. In some starch processing processes, the glucose and fructose shown in the lower left corner are subjected to further steps, such as, for example, combining into an aqueous solution that contains glucose and fructose, to form a high fructose corn syrup, or, for another example, removing water to form a solid sugar product.

The following is a detailed description of the invention.

As used herein, the following terms have the designated definitions, unless the context clearly indicates otherwise.

As used herein, "dissolved sugar solids" refers to all dissolved compounds that are monosaccharides, disaccharides, oligosaccharides, or polysaccharides. A monosaccharide is a saccharide compound that cannot be hydrolyzed to a simpler saccharide compound. Monosaccharides include trioses, tetroses, pentoses, hexoses, and heptoses. A disaccharide is a molecule formed when two monosaccharides are joined by a glycosidic linkage. An oligosaccharide is a molecule formed when three to ten monosaccharides are joined by glycosidic linkages. A polysaccharide is a molecule formed when eleven or more monosaccharides are joined by glycosidic linkages.

"Resin" as used herein is a synonym for "polymer." A "polymer," as used herein is a relatively large molecule made up of the reaction products of smaller chemical repeat units. Polymers may have structures that are linear, branched, star shaped, looped, hyperbranched, crosslinked, or a combination thereof; polymers may have a single type of repeat unit ("homopolymers") or they may have more than one type of repeat unit ("copolymers"). Copolymers may have the various types of repeat units arranged randomly, in sequence, in blocks, in other arrangements, or in any mixture or combination thereof. Polymers have weight-average molecular weights of 2,000 or more.

Molecules that can react with each other to form the repeat units of a polymer are known herein as "monomers."

The repeat units so formed are known herein as "polymerized units" of the monomer.

Vinyl monomers have a non-aromatic carbon-carbon double bond that is capable of participating in a free-radical polymerization process. Vinyl monomers have molecular weights of less than 2,000. Vinyl monomers include, for example, styrene, substituted styrenes, dienes, ethylene, ethylene derivatives, and mixtures thereof. Ethylene derivatives include, for example, unsubstituted and substituted versions of the following: vinyl acetate and acrylic monomers. "Substituted" means having at least one attached chemical group such as, for example, alkyl group, alkenyl group, vinyl group, hydroxyl group, alkoxy group, hydroxyalkyl group, carboxylic acid group, sulfonic acid group, amino group, quaternary ammonium group, other functional groups, and combinations thereof.

Monofunctional vinyl monomers have exactly one polymerizable carbon-carbon double bond per molecule. Multifunctional vinyl monomers have two or more polymerizable carbon-carbon double bonds per molecule.

As used herein, vinyl aromatic monomers are vinyl monomers that contain one or more aromatic ring.

Vinyl monomers are considered to form polymers through a process of vinyl polymerization, in which the carbon-carbon double bonds react with each other to form a polymer chain.

A polymer in which 90% or more of the polymerized units, by weight based on the weight of the polymer, are polymerized units of one or more vinyl monomers is a vinyl polymer. A vinyl aromatic polymer is a polymer in which 50% or more of the polymerized units, by weight based on the weight of the polymer, are polymerized units of one or more vinyl aromatic monomer. A vinyl aromatic polymer that has been subjected to one or more chemical reactions that result one or more substituent groups (such as, for example, an amino group or a methylene bridge group) being attached to the vinyl aromatic polymer is still considered herein to be a vinyl aromatic polymer. A polymerized unit of a vinyl aromatic monomer that has been subjected, after polymerization, to one or more chemical reactions that result one or more substituent groups (such as, for example, an amino group or a methylene bridge group) being attached to the polymerized unit of the vinyl aromatic monomer is still considered herein to be a polymerized unit of a vinyl aromatic monomer.

A resin is considered herein to be crosslinked if the polymer chain has sufficient branch points to render the polymer not soluble in any solvent. When it is said herein that a polymer is not soluble in a solvent, it means that less than 0.1 gram of the resin will dissolve in 100 grams of the solvent at 25°C.

As used herein, the term "amino group" refers to either a primary amino group, a secondary amino group, a tertiary amino group, or a quaternary ammonium group. A "non-quaternary amino group" is either a primary amino group, a secondary amino group, or a tertiary amino group, but is not a quaternary ammonium group.

A resin is considered to contain an amino group when the nitrogen atom of the amino group is either directly or indirectly covalently bound to the resin. That is, the nitrogen atom of the amino group may be covalently bound directly to an atom in the main chain of the polymer, or the nitrogen atom of the amino group may be covalently bound to an intermediate chemical group that is, in turn, covalently bound to an atom in the main chain of the polymer. Non-quaternary amino groups have the structure $-NR^1R^2$, or the structure $-N^+HR^1R^2$, where the open bond connects directly or indirectly to an atom on the main chain of the polymer; where each of $R^1$ and $R^2$ is independently hydrogen or a substituted or unsubstituted alkyl group. Neither $R^1$ nor $R^2$ is directly or indirectly bonded to an atom in the main chain of the polymer except through the nitrogen atom of the amino group via the open bond shown in the structure above.

A resin is considered herein to contain a quaternary ammonium group when the nitrogen atom of the quaternary ammonium group is either directly or indirectly covalently bound to the resin. A quaternary ammonium group has the structure $-N^+R^1R^2R^3$, where the open bond connects directly or indirectly to an atom on the main chain of the polymer; where each of $R^1$, $R^2$, and $R^3$ is independently a substituted or unsubstituted hydrocarbyl group. Each of $R^1$, $R^2$, and $R^3$ independently may or may not be directly or indirectly bonded to an atom in the main chain of the polymer through a set of covalent bonds that does not include the nitrogen atom of the amino group.

A methylene group is the divalent chemical group $-CH_2-$. A methylene group is considered herein to be a methylene bridge group between two aromatic rings when the carbon atom of the methylene group is bonded to a carbon atom of an aromatic ring and is also bonded to a carbon atom of a different aromatic ring. A methylene bridge group is the $-CH_2-$ group shown in the following structure (I):

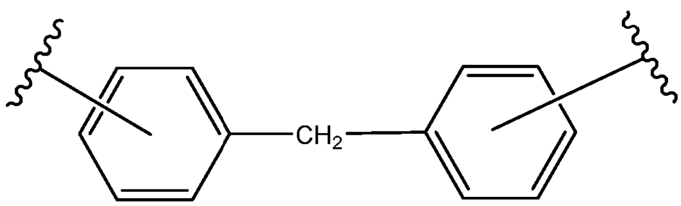
(I)

A collection of resin particles may be characterized by the diameters of the particles. A particle that is not spherical is considered to have a diameter equal to the diameter of a sphere having the same volume as the particle. A useful characterization of a collection of resin particles is D60, which is a diameter having the following property: 60%

by volume of the resin particles have diameter below D60, and 40% by volume of the resin particles have diameter of D60 or above. Similarly, 10% of the resin particles by volume have diameter below D10, and 90% of the resin particles by volume have diameter of D10 or above. The uniformity coefficient (UC) is found by dividing D60 by D10. The harmonic mean diameter (HMD) is defined by the following equation:

$$HMD = \frac{n}{\sum_{i=1}^{N}\left(\frac{1}{d_i}\right)}$$

where i is an index over the individual particles; $d_i$ is the diameter of each individual particle; and N is the total number of particles.

The Water Retention Capacity (WRC) of a collection of resin particles is a measure of the water molecules that adhere to the resin particles when bulk liquid water has been removed. WRC is measured by removing bulk liquid water from the collection of resin particles and allowing the collection of resin particles to come to equilibrium at room temperature (approximately 23°C) with air having 100% humidity to produce dewatered moist resin. The dewatered moist resin is weighed, dried, and weighed again. WRC is the weight loss divided by the initial weight, expressed as a percentage.

The surface area of a collection of resin particles is found using the Brunauer-Emmett-Teller (BET) method using nitrogen gas. The BET method with nitrogen gas is also used for characterizing the total pore volume and the average pore diameter of the collection of resin particles.

Activated carbon is a substance that is made of 75% or more elemental carbon by weight in the form of a combination of amorphous solid and graphite crystals. Activated carbon has surface area, as measured by the BET method, of 500 $m^2/g$ or higher.

The resin particles of the present invention comprise one or more vinyl aromatic polymers. Preferably, the total weight of polymerized units of all vinyl aromatic monomers is, by weight of the polymer, 50% or more; more preferably 75% or more; more preferably 90% or more; more preferably 95% or more.

Preferred vinyl aromatic monomers are styrene, alkyl styrenes, and multifunctional vinyl aromatic monomers. Among alkyl styrenes, preferred are those in which the alkyl group has 1 to 4 carbon atoms; more preferred is ethylvinylbenzene. Among multifunctional vinyl aromatic monomers, preferred is divinylbenzene. Preferably the polymer contains polymerized units of multifunctional vinyl aromatic monomer in as amount, by weight based on the weight of polymer, of 0.5% or more; more preferably 1% or more. Preferably the polymer contains polymerized units of multifunctional vinyl aromatic monomer in as amount, by weight based on the weight of polymer, of 10% or less; more preferably 8% or less.

Preferably, the polymer in the resin particles is crosslinked.

The collection of resin particles of the present invention contains both resin particles and water. Preferably the sum of the weight of resin particles plus the weight of the water, as a percentage based on the total weight of the collection of resin particles (which includes the resin particles, water, and optionally other ingredients), is 80% or more; more preferably 90% or more; more preferably 95% or more; more preferably 98% or more.

The polymer in the resin particles preferably contain methylene bridge groups. The amount of methylene bridge groups is characterized by the weight of methylene bridge groups as a percentage of the weight of the polymer. The amount of methylene bridge groups is preferably greater than zero. Preferably the amount of methylene bridge groups is 4% or less.

The polymer in the resin particles has non-quaternary amino groups. More preferably, the polymer in the resin particles has amino groups that are secondary or tertiary. Preferably both $R^1$ and $R^2$ (as defined above) are unsubstituted alkyl groups. Preferably each of $R^1$ and $R^2$ independently has 1 to 4 carbon atoms; more preferably 1 to 2 carbon atoms. Preferably $R^1$ and $R^2$ are the same as each other.

The total amount of all types of amino groups, including quaternary and non-quaternary, can be characterized by the equivalents of amino groups per liter of the collection of resin particles (eq/L). According to the invention, the polymer has amino groups in the amount of 0.1 eq/L or more; more preferably 0.2 eq/L or more; more preferably 0.5 eq/L or more. Further according to the invention, the polymer has total amino groups in the amount of 2.0 eq/L or less; more preferably 1.7 eq/L or less; more preferably 1.5 eq/L or less.

The polymer has quaternary ammonium groups in an amount, as equivalents per liter of the collection of resin particles, 0.25 eq/L or lower; preferably 0.2 eq/L or less. The polymer may have quaternary ammonium groups in an amount as low as zero.

Preferably, the polymer either has no groups that contain any atom other than carbon, hydrogen, and nitrogen or else has a total amount of groups that contain one or more atoms other than carbon, hydrogen, and nitrogen of 0.01 equivalents per liter of the collection of resin particles (eq/L) or less; more preferably 0.005 eq/L or less; more preferably 0.002 eq/L or less.

The resin particles of the present invention preferably have water retention capacity of 35% or more; more

preferably 40% or more. The resin particles of the present invention preferably have water retention capacity of 60% or less; more preferably 58% or less; more preferably 57% or less.

The particles of the present invention have a surface area of 200 $m^2/g$ or less; more preferably 100 $m^2/g$ or less. The particles of the present invention preferably have a surface area of 10 $m^2/g$ or more; more preferably 20 $m^2/g$ or more.

Preferably the collection of resin particles has harmonic mean diameter of 200 micrometers to 1,000 micrometers. Preferably the collection of resin particles has uniformity coefficient of 1.5 or lower; more preferably 1.3 or lower; more preferably less than 1.1.

The average pore diameter of the collection of resin particles is preferably 50 nm or smaller; more preferably 45 nm or smaller. The average pore diameter of the collection of resin particles is preferably 16 nm or larger; more preferably 18 nm or larger; more preferably 20 nm or larger.

The collection of resin particles may be made by any method. A preferred method of making the collection of resin particles is to first make a collection of polymer particles, using aqueous suspension polymerization of a monomer mixture. Preferably the monomer mixture contains one or more vinyl aromatic monomer. Preferably the vinyl aromatic monomers are hydrocarbons. More preferably, all monomers are hydrocarbons.

Preferably the monomer mixture also contains one or more porogen. A porogen is a compound that is liquid at 23°C and that is soluble in the monomer mixture, in the amounts used, at all temperatures between 23°C and the temperature of polymerization. A porogen does not effectively swell the polymer formed during polymerization but instead forms pockets of porogen within a matrix of the polymer. After polymerization, the porogen is removed, leaving pores in the polymer particle.

Preferably, after the polymerization, amine functional groups are added by a two-step process of halomethylation followed by amination.

Halomethylation may be accomplished, for example, by reacting the polymer with a halomethylating agent such as, for example, methylchloromethyl ether. It is considered that, during the halomethylation step, the predominant reaction is attaching a halomethyl group (such as, for example, a chloromethyl group) to a carbon atom on in aromatic ring. It is also considered that, during halomethylation, a side reaction also occurs, in which methylene bridge groups (as shown in structure (I) above) are formed that connect aromatic rings of the polymer to each other.

Amination of the halomethylated polymer may be accomplished, for example, by reacting the polymer with an amination agent such as, for example, dimethylamine. It is considered that the predominant reaction during the amination process is the conversion of halomethyl groups to amino groups, such as, for example, the conversion of chloromethyl groups to dimethylaminomethyl groups. It is also considered that, during amination, a side reaction occurs in which two halomethyl groups become linked to each other through a quaternary ammonium group, resulting in a structure like, for example, the following:

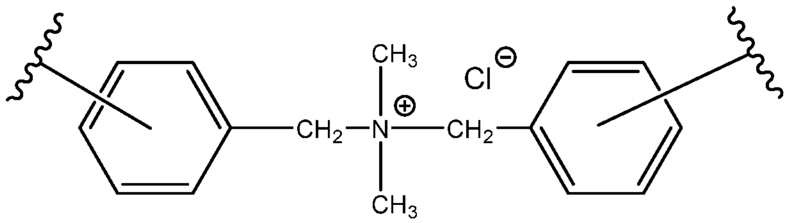

In making the collection of resin particles of the present invention, it is preferred that the chloromethylated polymer is not subjected to a Friedel-Crafts chemical reaction. A Friedel-Crafts reaction involves reacting the polymer in the presence of a solvent, such as, for example, ethylene dichloride, in the presence of a Friedel-Crafts catalyst such as, for example, $FeCl_3$. The Friedel-Crafts reaction causes the carbon atom in the $-CH_2Cl$ group of a benzyl chloride group to become un-bonded from the chlorine atom and to become bonded to an aromatic carbon atom located on a new aromatic ring, thus forming a methylene bridge.

Activated carbon may be in any form. Preferred forms are powdered and granulated. Powdered activated carbon is in the form of a collection of particles in which 90% or more of the particles by volume have diameter less than 1 mm in diameter, with harmonic mean size between 50 $\mu$m and 500 $\mu$m. Granulated activated carbon is in the form of a collection of particles in which 85% or more of the particles by volume have diameter of 840 $\mu$m or higher.

The aqueous solution may be obtained from any source. Some suitable sources include high fructose corn syrup process streams, cane or beet sugar process streams, fermentation broths, starch streams or extracts, and cellulosic hydrolysates. Preferred are high fructose corn syrup process streams and cane or beet sugar process streams; more preferred are high fructose corn syrup streams. In cane or beet sugar process streams, preferably the aqueous solution is obtained by a process that includes mechanical operations on the beet or cane (such as one or more of

milling, slicing, pressing, or a combination thereof); formation of a mixture of water with the cane or beet or with the product of the mechanical process; and optional filtration of that mixture. In high fructose corn syrup processes, preferably the aqueous solution is obtained by a process that includes milling the corn to extract starch; formation of a mixture of water with the corn or the product of the milling; addition of acid and/or enzymes to that mixture to break the starch down in to shorter-length saccharides; and filtration of the mixture.

Preferably the amount of dissolved sugar solids in the aqueous solution is, by weight based on the weight of the aqueous solution, 10% or higher; more preferably 20% or higher; more preferably 25% or higher. Preferably the amount of dissolved sugar solids in the aqueous solution is, by weight based on the weight of the aqueous solution, 70% or less; more preferably 50% or less; more preferably 40% or less.

Preferably the total amount of all monosaccharides is, by weight based on the weight of the dissolved sugar solids, 1% or higher; more preferably 5% or higher; more preferably 20% or higher; more preferably 90% or higher; more preferably 92% or higher. Preferably the monosaccharides contain glucose, fructose, or a mixture thereof; more preferably the monosaccharides contain glucose. Preferably the amount of glucose is, by weight based on the total weight of all the monosaccharides, 50% or higher; more preferably 70% or higher; more preferably 92% or higher.

Preferably, the sum of the amount of water plus the amount of dissolved sugar solids is, by weight based on the weight of the aqueous solution, 50% or higher; more preferably 70% or higher; more preferably 90% or higher; more preferably 95% or higher

The aqueous solution preferably has conductivity of 100 $\mu$S/cm or higher; more preferably 200 $\mu$S/cm or higher. The aqueous solution preferably has conductivity of 10,000 $\mu$S/cm or lower; more preferably 5,000 $\mu$S/cm or lower.

The aqueous solution has color content of 100 international color units (ICU, as defined by the International Commission for Uniform Methods of Sugar Analysis (ICUMSA)) or more. Preferably, the aqueous solution has color content of 10,000 ICU or lower; more preferably 5,000 ICU or lower; more preferably 2,000 ICU or lower.

The aqueous solution may be brought into contact with the collection of resin particles of the present invention by any method. Preferably, after the aqueous solution has been brought into contact with collection of resin particles, the solution is then separated from the collection of resin particles. It is contemplated that, after the separation, some substances that imparted color to the original aqueous solution will remain on the collection of resin particles, and the color content of the aqueous solution will be significantly reduced.

A preferred method is to pass the aqueous solution through a fixed bed of the collection of resin particles. The fixed bed is held in a container that holds the collection of resin particles in place while allowing the aqueous solution to enter through an inlet, to make contact with the collection of resin particles, and to exit through an outlet. A suitable container is a chromatography column. When this method is used, the flow rate of aqueous solution through the fixed bed is characterized by bed volumes per hour (BV/hr), where the bed volume (BV) is the volume of the resin in the fixed bed. Preferred flow rates are 0.1 BV/hr or higher; more preferably 0.5 BV/hr or higher. Preferred flow rates are 10 BV/hr or less, more preferably 5 BV/hr or less.

After the aqueous solution is removed from contact with the resin, the aqueous solution is referred to herein as a "resin-treated" solution. The resin-treated solution is brought into contact with activated carbon. Contact may be made in any manner. After contact with the activated carbon, the aqueous solution is removed from contact with the activated carbon, and the resulting aqueous solution is referred to herein as a resin-carbon treated aqueous solution.

When the activated carbon is in powder form, the preferred method of bringing the activated carbon into contact with the resin-treated aqueous solution is to place the activated carbon and the resin-treated aqueous solution into a single container to form a mixture and to provide mechanical agitation, such as by stirring. The aqueous solution is then preferably separated from the activated carbon, for example by settling or filtration or centrifugation or a combination thereof.

When the activated carbon is in granulated form, the preferred method of bringing the activated carbon into contact with the resin-treated aqueous solution is to pass the aqueous solution through a fixed bed of a collection of activated carbon particles. The fixed bed is held in a container that holds the collection of activated carbon particles in place while allowing the aqueous solution to enter through an inlet, to make contact with the collection of activated carbon particles, and to exit through an outlet. A suitable container is a chromatography column.

The resin-carbon treated aqueous solution may be used for any purpose. Preferably the resin-carbon treated aqueous solution is subjected to one or more of the following operations: contact with one or more cation-exchange media; contact with one or more anion-exchange media in addition to the collection of resin particles of the present invention; or a combination thereof.

If the aqueous solution was produced as part of a beet or cane sugar process stream, the resin-carbon treated aqueous solution is preferably subjected to one of more of the following operations: crystallization of the sugar in the solution; contact with one or more cation-exchange media; contact with one or more anion-exchange media in addition to the collection of resin particles of the present invention; contact with a chromatography resin; or a combination thereof.

If the aqueous solution was produced as part of a high fructose corn syrup production process, the resin-carbon treated aqueous solution is preferably subjected to one of more of the following operations: contact with one or more

cation-exchange media; contact with one or more anion-exchange media in addition to the collection of resin particles of the present invention; isomerization to convert some or all of the glucose into fructose; contact with a chromatography resin to produce separate glucose-rich and fructose-rich solutions; or a combination thereof.

It is contemplated that the use of the present invention provides a significant advantage in the treatment of sugar solutions. Normally, in many of the process streams that produce various sugar products, an aqueous solution is found that contains both dissolved sugars and also contains some impurities, including color compounds (i.e., compounds that impart color to the solution and may impart color to the finished sugar product), one or more dissolved acids, and possibly other impurities. A common practice has been to treat such a sugar solution by contacting the sugar solution with activated carbon to remove some or all of the color compounds. Activated carbon is effective at removing color compounds, but activated carbon eventually loses its ability to remove further color compounds, and then regenerating the activated carbon (i.e., removing the color compounds so that the activated carbon can be re-used) is normally either impossible or undesirably expensive.

It has now been found that operating life of the activated carbon can be significantly increased by using a two-step process (also called a "staged" process) as described herein. In the practice of the present invention, the aqueous solution is first contacted with a resin containing bonded non-quaternary amino groups (sometimes called a weak-base anion exchange resin, or "WBA" resin), and then the resin-treated aqueous solution is contacted with the activated carbon. The WBA resin removes a significant amount of the color compounds from the aqueous solution. Thus the amount of color compounds that need to be removed by the activated carbon is much reduced.

Because of the reduction in the amount of color compounds that need to be removed by the activated carbon, the operating life of the activated carbon is extended. That is, the activated carbon can remove color from a larger total amount of aqueous solution before the activated carbon loses its ability to remove color compounds.

In contrast to activated carbon the WBA resin can be regenerated much more easily and inexpensively than activated carbon. Also, a resin of the present invention is preferably capable of removing a relatively large amount of color compounds before the resin needs to be regenerated. Thus, in the staged method of the present invention, the WBA resin can be easily regenerated, when needed, and the operating life of the activated carbon is extended. Thus the process of removing color from aqueous sugar solutions can be performed with less difficulty and expense by using the method of the present invention.

The details of the improvement imparted by the present invention depend on the type of activated carbon (powdered or granular) that is used.

When powdered activated carbon is used, it is typically used once and then discarded. If the sugar solution were treated first by contact with resin according to the present invention, then a smaller amount of carbon would be needed to achieve the desired level of removal of color, thus reducing the amount of wasted activated carbon.

When granular activated carbon is used, it is typically used until it no longer effectively removes colored substances, and then it is typically regenerated, usually by heating in a furnace under controlled atmosphere at approximately 800°C. This regeneration requires a large cost to operate the special furnace, and the regeneration causes some loss of carbon during each regeneration cycle. If the sugar solution were first treated by contact with resin, then the carbon could be used for a longer time without regeneration, thus reducing the operating cost of the furnace and also reducing the waste of carbon during regeneration.

It is also contemplated that the resin used in the present invention can be easily regenerated by passing a dilute caustic solution over the resin, at very low expense and with very little waste. Examples of regeneration conditions can be seen, for example, in the publication "DOWEX™ MONOSPHERE™ 77 Ion Exchange Resin for Sweetener Applications," form number 177-01710-0209, published by the Dow Chemical Company, Midland, Michigan, USA. Therefore, even when the regeneration of the resin is taken into account, there are significant advantages to the use of the present invention over using activated carbon alone for decolorizing sugar solutions.

Preferably, the process of the present invention is conducted as part of a larger process that produces one or more sugar product. Preferably, after the color compounds are removed, the resin-carbon treated aqueous solution is subjected to one or more additional steps to further purify the solution and/or to isolate one or more sugar products, such as, for example fructose, glucose, sucrose, a solution thereof, or a combination thereof. Some of such additional steps that are appropriate for each type of product are described herein above.

The following are examples of the present invention. Operations were performed at room temperature (approximately 23°C) except where otherwise stated.

Materials used were as follows:

HFCS = high fructose corn syrup from Sweeteners Plus

Resin1 = Commercial weak base anion exchange resin; polymerized units of styrene and divinylbenzene; macroporous; functionalized with tertiary amine groups; harmonic mean diameter between 475 μm and 575 μm; total amount of all amine groups 1.44 eq/L; amount of quaternary ammonium groups 0.17 eq/L; moisture hold capacity 54.7%; uniformity coefficient less than 1.1; surface area 54.4 $m^2/g$; average pore diameter 23.4 nm.

GAC = CPG LF granular activated carbon from Calgon Carbon Corporation
PAC = PWA powdered activated carbon from Calgon Cargon Corporation

Absorbance was measured at 420 nm using a Thermo Scientific Genesys™ 10uv Scanning spectrophotometer using 1 cm glass cuvettes.

The aqueous solution (AQS1) containing sugar and colored substances was produced as follows. High fructose corn syrup (HFCS) was used in which 42% by weight of the dissolved sugar solids were fructose and approximately 55% by weight of the dissolved sugar solids were glucose. The HFCS was diluted to 30 Brix in deionized water. 7% hydrochloric acid solution (by weight in water) was added to reduce the pH of the HFCS to approximately 1. The acidic HFCS was heated to 80°C and stirred for approximately 4-6 hours. During this time the sugars in the HFCS decomposed and reacted to form colored substances. It is considered that the colored substances included hydroxymethylfurfural (HMF) and other substances. Heating was discontinued once the color of the HFCS reached an absorbance at 420 nm of approximately 0.35. The HFCS was cooled and the pH was increased back to 3.5-4.0 using 4% sodium hydroxide solution (by weight in water). The resulting colored HFCS liquid is referred to herein as AQS1.

It is contemplated that results obtained using this aqueous solution AQS1 would be similar to results that would be obtained if the aqueous solution contained a higher proportion of glucose (for example, 90% by weight or higher of the dissolved sugar solids). For example, if the aqueous solution were obtained from a high fructose corn syrup process stream (instead of from the laboratory procedure described above), it is expected that the aqueous solution could have a relatively high proportion of glucose and could have relatively little fructose. It is expected that performing the method of the present invention using an aqueous solution obtained from a high fructose corn syrup process stream would yield similar benefits to the benefits reported herein that were obtained by using the aqueous solution AQS1 made in the laboratory procedure described above.

All procedures that used chromatography columns used glass columns with jackets that contained circulating water at a controlled temperature.

Treatment of AQS1 with Resin 1 was performed as follows. A column containing 30 mL of Resin1 in the free base form was used to prepare resin-treated solution. AQS1 solution with an absorbance at 420 nm of 0.33 was passed through the Resin1 bed at a flowrate of 120 mL/hr (4.0 bed volumes/hr). The bed was maintained at 60°C throughout this process. The resulting column effluent (i.e., the resin-treated solution) had an average absorbance at 420 nm of 0.11. The treatment was continued so that over 800 BV of AQS1 was treated with Resin1. The absorbance of the effluent was monitored throughout the process, with the following results:

Table A: Absorbance (Abs) at 420 nm (AQS1 after treatment with Resin1)

| BV | Abs |
|---|---|
| 25 | 0.085 |
| 85 | 0.086 |
| 114 | 0.089 |
| 174 | 0.092 |
| 201 | 0.094 |
| 365 | 0.1 |
| 444 | 0.104 |
| 471 | 0.104 |
| 534 | 0.113 |
| 563 | 0.114 |
| 625 | 0.121 |
| 650 | 0.122 |
| 716 | 0.128 |
| 740 | 0.131 |
| 804 | 0.133 |

The absorbance stayed low while a relatively large amount of aqueous solution was treated. These results

demonstrate that a relatively large amount of aqueous solution can be treated with a resin of the present invention without the need for regenerating the resin.

Comparative Example 1C: decolorization of AQS1 with powdered activated carbon.

Several different doses of PAC were shaken at 60°C with AQS1, and the absorbance of the liquid in contact with the PAC was measured every 30 minutes. Table 1 below shows the results of this experiment.

Table 1: Absorbance at 420 nm (AQS1 with PAC)

| | **Time (Minutes)** | | |
|---|---|---|---|
| **Carbon Dosage (g/L)** | **0** | **30** | **60** |
| 0.34 | 0.310 | 0.122 | 0.092 |
| 0.50 | 0.310 | 0.063 | 0.044 |
| 0.75 | 0.310 | 0.041 | 0.032 |
| 1.00 | 0.310 | 0.024 | 0.015 |
| 1.25 | 0.310 | 0.010 | 0.007 |

Example 2: decolorization of resin-treated AQS1 with powdered activated carbon.

Several different doses of PAC were shaken at 60°C with resin-treated AQS1 (dose of carbon is characterized by grams of carbon per liter of AQS1), and the absorbance of the liquid in contact with the PAC was measured every 30 minutes. Table 2 below shows the results of this experiment.

Table 2: Absorbance at 420 nm (resin-treated AQS1 with PAC)

| | **Time (Minutes)** | | |
|---|---|---|---|
| **Carbon Dosage (g/L)** | **0** | **30** | **60** |
| 0.34 | 0.114 | 0.037 | 0.020 |
| 0.50 | 0.129 | 0.018 | 0.014 |
| 0.63 | 0.129 | 0.014 | 0.011 |
| 6.80 | 0.129 | 0.002 | 0.000 |
| 15.00 | 0.129 | 0.000 | 0.000 |

The resin-treated solution requires much less carbon to achieve a low level of absorbance. For example, after 30 minutes of exposure to the PAC, the AQS1 required 0.75 g/L of PAC in to reduce absorbance to 0.041. In contrast, also after 30 minutes of exposure to the PAC, resin-treated AQS1 had even lower absorbance (i.e., 0.037) at carbon dose of 0.34 g/L. That is, with the resin-treated AQS1, less than half the carbon dose achieved an even lower absorbance, in comparison with the AQS1 that had not been resin-treated.

Example 3C: decolorization of AQS1 with granular activated carbon.

Three equal volumes of GAC (8.0 mL) were each placed in a jacketed glass column and heated to 65°C. AQS1 was flowed through the columns at 12 mL/hr (1.5 BV/hr) for each column. The pH of AQS1 was 3.8. Samples of effluent were taken, and the absorbance was measured. Results are in Table 3.

Table 3: Absorbance ("Abs" at 420 nm) of Effluent (AQS1 and GAC)

| BV | Abs | BV | Abs | BV | Abs |
|---|---|---|---|---|---|
| 4 | 0.003 | 70 | 0.006 | 222 | 0.019 |
| 11 | 0.005 | 77 | 0.007 | 231 | 0.021 |
| 18 | 0.006 | 84 | 0.007 | 260 | 0.021 |
| 25 | 0.006 | 90 | 0.007 | 269 | 0.023 |
| 38 | 0.006 | 97 | 0.007 | 298 | 0.027 |
| 42 | 0.003 | 134 | 0.01 | 335 | 0.033 |
| 49 | 0.004 | 148 | 0.012 | 347 | 0.034 |
| 56 | 0.005 | 161 | 0.012 | 374 | 0.039 |
| 63 | 0.005 | 175 | 0.013 | 426 | 0.044 |

Table 3 (continued): Absorbance ("Abs" at 420 nm) of Effluent (AQS1 and GAC)

| BV | Abs | BV | Abs | BV | Abs |
|---|---|---|---|---|---|
| 491 | 0.059 | 635 | 0.079 | 834 | 0.111 |
| 502 | 0.06 | 643 | 0.081 | 862 | 0.111 |
| 529 | 0.067 | 681 | 0.075 | 946 | 0.123 |
| 541 | 0.068 | 748 | 0.094 | 1014 | 0.131 |
| 567 | 0.066 | 758 | 0.095 | 1025 | 0.133 |
| 569 | 0.068 | 786 | 0.101 | 1052 | 0.136 |
| 596 | 0.073 | 797 | 0.1 | | |
| 608 | 0.073 | 825 | 0.106 | | |

Comparative Example 4: decolorization of resin-treated AQS1 with granular activated carbon.

The procedure of Example 3C was repeated, using resin-treated AQS1 instead of plain AQS1. The pH of resin-treated AQS1 was 4.7. Results are in Table 4.

Table 4: Absorbance ("Abs" at 420 nm) of Effluent (resin-treated AQS1 and GAC)

| BV | Abs | BV | Abs | BV | Abs |
|---|---|---|---|---|---|
| 5 | 0.001 | 68 | 0.01 | 213 | 0.018 |
| 12 | 0.002 | 75 | 0.011 | 221 | 0.019 |
| 18 | 0.001 | 81 | 0.012 | 249 | 0.019 |
| 25 | 0.002 | 88 | 0.012 | 258 | 0.02 |
| 36 | 0.005 | 95 | 0.012 | 285 | 0.02 |
| 42 | 0.005 | 130 | 0.017 | 321 | 0.022 |
| 49 | 0.007 | 143 | 0.018 | 332 | 0.021 |
| 55 | 0.007 | 156 | 0.018 | 358 | 0.022 |
| 62 | 0.009 | 169 | 0.017 | 408 | 0.025 |

Table 4 (continued): Absorbance (420 nm) of Effluent (resin-treated AQS1 and GAC)

| BV | Abs | BV | Abs | BV | Abs |
|---|---|---|---|---|---|
| 470 | 0.027 | 658 | 0.03 | 863 | 0.022 |
| 481 | 0.025 | 666 | 0.03 | 892 | 0.022 |
| 506 | 0.027 | 705 | 0.022 | 979 | 0.024 |
| 519 | 0.029 | 774 | 0.022 | 1050 | 0.026 |
| 544 | 0.028 | 785 | 0.021 | 1061 | 0.026 |
| 589 | 0.03 | 813 | 0.023 | 1089 | 0.025 |
| 617 | 0.03 | 824 | 0.023 | | |
| 629 | 0.029 | 854 | 0.024 | | |

Example 5: decolorization of pH-adjusted resin-treated AQS1 with granular activated carbon.

The procedure of Comparative Example 4 was repeated, using resin-treated AQS1 that had been adjusted to pH = 3.8, to have the same pH as AQS1. Results are in Table 5.

Table 5: Absorbance ("Abs" at 420 nm) of Effluent (pH-adjusted resin-treated AQS1 and GAC)

| BV | Abs |
|---|---|
| 9 | 0.001 |
| 36 | 0.002 |
| 85 | 0.009 |
| 147 | 0.009 |
| 158 | 0.009 |
| 184 | 0.009 |
| 196 | 0.009 |
| 221 | 0.011 |
| 236 | 0.011 |

| BV | Abs |
|---|---|
| 263 | 0.012 |
| 274 | 0.011 |
| 302 | 0.013 |
| 310 | 0.011 |
| 347 | 0.01 |
| 413 | 0.011 |
| 424 | 0.013 |
| 451 | 0.01 |
| 462 | 0.011 |

| BV | Abs |
|---|---|
| 490 | 0.011 |
| 499 | 0.011 |
| 526 | 0.011 |
| 610 | 0.016 |
| 678 | 0.015 |
| 688 | 0.015 |
| 715 | 0.014 |
| | |
| | |

At BV above 300, Comparative Example 4C showed a large difference in absorbance behavior in comparison to the two inventive Examples 4 and 5. Above 300 BV, the absorbance of Comparative Example 4C continues to increase, reaching absorbance of over 0.13 at BV above 1,000. In contrast, above 300 BV, the absorbance of Example 4 is roughly constant at approximately 0.025, and the absorbance of Example 5 is roughly constant at approximately 0.012.

This difference has a major effect on a decolorizing process. For example, if it is desired to produce a solution having absorbance of 0.035 or below, the above results show that, when non-treated AQS1 is used, the carbon would have to be taken out of service and regenerated after approximately 300 BV. In contrast, when resin-treated AQS1 is used, the carbon may be used for more than 1000 BV without a need for regeneration.

## Claims

**1.** A process for treating an aqueous solution,
wherein the aqueous solution comprises dissolved sugar solids in an amount of 10% to 50% by weight based on the weight of the aqueous solution;
wherein the dissolved sugar solids contain monosaccharides in an amount of 1% to 99% by weight based on the weight of the dissolved sugar solids;
wherein the aqueous solution has ionic conductivity of 100 to 10,000 $\mu$S/cm and color content of 100 to 10,000 international color units;
wherein the process comprises

(a) bringing the aqueous solution into contact with a collection of resin particles,

wherein the resin particles comprise one or more vinyl aromatic polymers;
wherein the polymer comprises non-quaternary amino groups bonded to the resin particles and which are present in an amount of 0.1 to 2.0 equivalents per liter of resin particles; and
wherein quaternary ammonium groups bonded to the resin particles are present in an amount of 0 to 0.25 equivalents per liter of resin particles;

(b) separating the aqueous solution from the collection of resin particles to produce a resin-treated aqueous solution;
(c) bringing the resin-treated aqueous solution into contact with activated carbon; and
(d) separating the resin-treated aqueous solution from the activated carbon to produce a resin-carbon-treated solution,

wherein the aqueous solution is first contacted with the resin, and then the resin-treated aqueous solution is contacted with the activated carbon.

2. The process of claim 1, wherein the resin particles have average pore diameter of 16 nm or larger, as determined using the Brunauer-Emmett-Teller (BET) method using nitrogen gas.

3. The process of claim 1, wherein steps (a) and (b) are performed by passing the aqueous solution through a fixed bed of the resin particles, and wherein steps (c) and (d) are performed by

(i) placing the activated carbon and the resin-treated aqueous solution into a single container to form a mixture, and then separating the resin-carbon treated aqueous solution from the activated carbon, or
(ii) passing the resin-treated aqueous solution through a fixed bed of a collection of activated carbon particles,
(iii) a combination of (i) and (ii).

4. The process of claim 1, wherein the aqueous solution is obtained from a high fructose corn syrup process stream.

5. The process of claim 1, wherein the aqueous solution is obtained from a cane or beet sugar process stream.

6. The process of claim 1, further comprising one or more of the following steps after step (d):

contacting the resin-carbon treated aqueous solution with one or more cation-exchange media;
contacting the resin-carbon treated aqueous solution with one or more anion-exchange media in addition to the collection of resin particles of the present invention;
isomerizing the resin-carbon treated aqueous solution to convert some or all of the glucose contained in the resin-carbon treated aqueous solution into fructose; or
contacting the resin-carbon treated aqueous solution with a chromatography resin to produce separate glucose-rich and fructose-rich solutions.

7. The process of claim 1, wherein the resin particles have surface area of 200 $m^2/g$ or less, as determined using the Brunauer-Emmett-Teller (BET) method using nitrogen gas.

8. The process of claim 1, wherein the resin particles have water retention capacity ("WRC") of 35% to 60%, wherein WRC of a collection of resin particles is a measure of the water molecules that adhere to the resin particles when bulk liquid water has been removed, and is measured by removing bulk liquid water from the collection of resin particles and allowing the collection of resin particles to come to equilibrium at room temperature (approximately 23°C) with air having 100% humidity to produce dewatered moist resin, following which the dewatered moist resin is weighed, dried, and weighed again, and WRC is the weight loss divided by the initial weight, expressed as a percentage.

## Patentansprüche

1. Verfahren zur Behandlung einer wässrigen Lösung,
wobei die wässrige Lösung gelöste Zuckerfeststoffe in einer Menge von 10 bis 50 Gew.-%, auf das Gewicht der wässrigen Lösung bezogen, umfasst;
wobei die gelösten Zuckerfeststoffe Monosaccharide in einer Menge von 1 bis 99 Gew.-%, auf das Gewicht der gelösten Zuckerfeststoffe bezogen, enthalten;
wobei die wässrige Lösung eine ionische Leitfähigkeit von 100 bis 10.000 μS/cm und einen Farbgehalt von 100 bis 10.000 internationale Farbeinheiten aufweist;
wobei das Verfahren Folgendes umfasst

(a) Bringen der wässrigen Lösung in Kontakt mit einer Ansammlung von Harzteilchen, wobei die Harzteilchen ein oder mehrere vinylaromatische Polymere umfassen;
wobei das Polymer nichtquaternäre Aminogruppen umfasst, die an die Harzteilchen gebunden sind und die in einer Menge von 0,1 bis 2,0 Äquivalenten pro Liter Harzteilchen vorliegen; und
wobei quartäre Ammoniumgruppen, die an die Harzteilchen gebunden sind, in einer Menge von 0 bis 0,25 Äquivalenten pro Liter Harzteilchen vorliegen;
(b) Trennen der wässrigen Lösung von der Ansammlung von Harzteilchen, um eine harzbehandelte wässrige

Lösung herzustellen;
(c) Bringen der harzbehandelten wässrigen Lösung in Kontakt mit Aktivkohle; und
(d) Trennen der harzbehandelten wässrigen Lösung von der Aktivkohle, um eine mit Harz-Kohlenstoff behandelte Lösung herzustellen,
wobei die wässrige Lösung zuerst mit dem Harz in Kontakt gebracht wird und die harzbehandelte wässrige Lösung dann mit der Aktivkohle in Kontakt gebracht wird.

**2.** Verfahren nach Anspruch 1, wobei die Harzteilchen einen durchschnittlichen Porendurchmesser von 16 nm oder breiter, wie unter Anwendung des Brunauer-Emmett-Teller- (BET-) Verfahrens unter Anwendung von Stickstoffgas bestimmt, aufweisen.

**3.** Verfahren nach Anspruch 1, wobei die Schritte (a) und (b) durch Hindurchführen der wässrigen Lösung durch ein Festbett der Harzteilchen ausgeführt werden und wobei die Schritte (c) und (d) ausgeführt werden durch

(i) Platzieren der Aktivkohle und der harzbehandelten wässrigen Lösung in einen einzigen Behälter, um eine Mischung zu bilden, und dann Trennen der mit Harz-Kohlenstoff behandelten wässrigen Lösung von der Aktivkohle oder
(ii) Hindurchführen der harzbehandelten wässrigen Lösung durch ein Festbett einer Ansammlung von Aktivkohleteilchen,
(iii) eine Kombination von (i) und (ii).

**4.** Verfahren nach Anspruch 1, wobei die wässrige Lösung von einem Maissirupprozessstrom mit hohem Fruktosegehalt erhalten wird.

**5.** Verfahren nach Anspruch 1, wobei die wässrige Lösung aus einem Rohr- oder Rübenzuckerprozessstrom erhalten wird.

**6.** Verfahren nach Anspruch 1, ferner einen oder mehrere der folgenden Schritte nach Schritt (d) umfassend:

In-Kontakt-Bringen der mit Harz-Kohlenstoff behandelten wässrigen Lösung mit einem oder mehreren Kationenaustauschmedien;
In-Kontakt-Bringen der mit Harz-Kohlenstoff behandelten wässrigen Lösung mit einem oder mehreren Anionenaustauschmedien zusätzlich zu der Ansammlung von Harzteilchen der vorliegenden Erfindung,
Isomerisieren der mit Harz-Kohlenstoff behandelten wässrigen Lösung, um einen Teil oder die Gesamtheit der Glucose, die in der mit Harz-Kohlenstoff behandelten wässrigen Lösung enthalten ist, in Fruktose umzuwandeln; oder
In-Kontakt-Bringen der mit Harz-Kohlenstoff behandelten wässrigen Lösung mit einem Chromatographieharz, um getrennte glucosereiche und fruktosereiche Lösungen herzustellen.

**7.** Verfahren nach Anspruch 1, wobei die Harzteilchen einen Oberflächenbereich von 200 $m^2/g$ oder weniger, wie unter Anwendung des Brunauer-Emmett-Teller- (BET-) Verfahrens unter Anwendung von Stickstoffgas bestimmt, aufweisen.

**8.** Verfahren nach Anspruch 1, wobei die Harzteilchen eine Wasserrückhaltefähigkeit ("WRC") von 35 % bis 60 % aufweisen, wobei WRC einer Ansammlung von Harzteilchen ein Maß der Wassermoleküle ist, die an den Harzteilchen anhaften, wenn flüssiges Wasser im Großteil entfernt worden ist, und durch Entfernen von flüssigem Wasser im Großteil von der Ansammlung von Harzteilchen und Gestatten, dass die Ansammlung von Harzteilchen bei Raumtemperatur (etwa 23 °C) das Äquilibrium mit Luft erreicht, die 100 % Feuchte aufweist, gemessen wird, um entwässertes feuchtes Harz herzustellen, woraufhin das entwässerte feuchte Harz gewogen, getrocknet und nochmals gewogen wird, und WRC der Gewichtsverlust durch das anfängliche Gewicht geteilt, als Prozentsatz ausgedrückt, ist.

## Revendications

**1.** Procédé de traitement d'une solution aqueuse,
la solution aqueuse comprenant des solides de sucre dissous en une quantité de 10 % à 50 % en poids sur la base du poids de la solution aqueuse;

les solides de sucre dissous contenant des monosaccharides en une quantité de 1 % à 99 % en poids sur la base du poids des solides de sucre dissous;
la solution aqueuse ayant une conductivité ionique de 100 à 10 000 μS/cm et une teneur en couleur de 100 à 10 000 unités internationales de couleur;
le procédé comprenant

(a) le fait de porter la solution aqueuse en contact avec une collection de particules de résine,
les particules de résine comprenant un ou plusieurs polymères de vinyle aromatiques;
le polymère comprenant des groupes amino non quaternaires liés aux particules de résine et qui sont présents en une quantité de 0,1 à 2,0 équivalents par litre de particules de résine; et
des groupes d'ammonium quaternaire liés aux particules de résine étant présents en une quantité de 0 à 0,25 équivalent par litre de particules de résine;
(b) la séparation de la solution aqueuse de la collection des particules de résine pour produire une solution aqueuse traitée avec de la résine;
(c) le fait de porter la solution aqueuse traitée avec de la résine en contact avec du charbon actif; et
(d) la séparation de la solution aqueuse traitée avec de la résine du charbon actif pour produire une solution traitée résine-charbon,

la solution aqueuse étant premièrement mise en contact avec la résine, et ensuite la solution aqueuse traitée avec de la résine étant mise en contact avec le charbon actif.

2. Procédé selon la revendication 1, les particules de résine ayant un diamètre moyen de pore de 16 nm ou plus large, tel que déterminé en utilisant le procédé de Brunauer-Emmett-Teller (B.E.T.) en utilisant du gaz azote.

3. Procédé selon la revendication 1, les étapes (a) et (b) étant effectuées en faisant passer la solution aqueuse à travers un lit fixe des particules de résine, et les étapes (c) et (d) étant effectuées par

(i) mise en place du charbon actif et de la solution aqueuse traitée avec de la résine dans un récipient unique pour former un mélange, et ensuite la séparation de la solution aqueuse traitée de résine-charbon du charbon actif, ou
(ii) le fait de faire passer la solution aqueuse traitée avec de la résine à travers un lit fixe d'une collection de particules de charbon actif,
(iii) une combinaison de (i) et (ii).

4. Procédé selon la revendication 1, la solution aqueuse étant obtenue à partir d'un flux de procédé de sirop de maïs à teneur élevée en fructose.

5. Procédé selon la revendication 1, la solution aqueuse étant obtenue à partir d'un flux de procédé de sucre de canne ou de betterave.

6. Procédé selon la revendication 1, comprenant en outre une ou plusieurs étapes suivantes après l'étape (d):

mise en contact de la solution aqueuse traitée de résine-charbon avec un ou plusieurs milieux d'échanges de cations;
mise en contact de la solution aqueuse traitée de résine-charbon avec un ou plusieurs milieux d'échange d'anions en plus de la collection des particules de résine de la présente invention;
isomérisation de la solution aqueuse traitée de résine-charbon pour convertir une partie ou tout le glucose contenu dans la solution aqueuse traitée de résine-charbon en fructose; ou
mise en contact de la solution aqueuse traitée de résine-charbon avec une résine de chromatographie pour produire des solutions séparées riches en glucose et riches en fructose.

7. Procédé selon la revendication 1, les particules de résine ayant une surface spécifique de 200 $m^2/g$ ou moins, telle que déterminée en utilisant le procédé de Brunauer-Emmett-Teller (B.E.T.) en utilisant du gaz azote.

8. Procédé selon la revendication 1, les particules de résine ayant une capacité de rétention d'eau (« WRC ») de 35 % à 60 %, la WRC d'une collection des particules de résine étant une mesure des molécules d'eau qui adhèrent aux particules de résine lorsque l'eau liquide en vrac a été retirée, et étant mesurée en retirant l'eau liquide en vrac de la collection des particules de résine et en permettant à la collection des particules de résine de parvenir à

l'équilibre à la température ambiante (approximativement 23°C) avec de l'air ayant 100 % d'humidité pour produire de la résine humide déshydratée, suite à quoi la résine humide déshydratée est pesée, séchée, et à nouveau pesée, et la WRC est la perte de poids divisée par le poids initial, exprimée sous la forme d'un pourcentage.

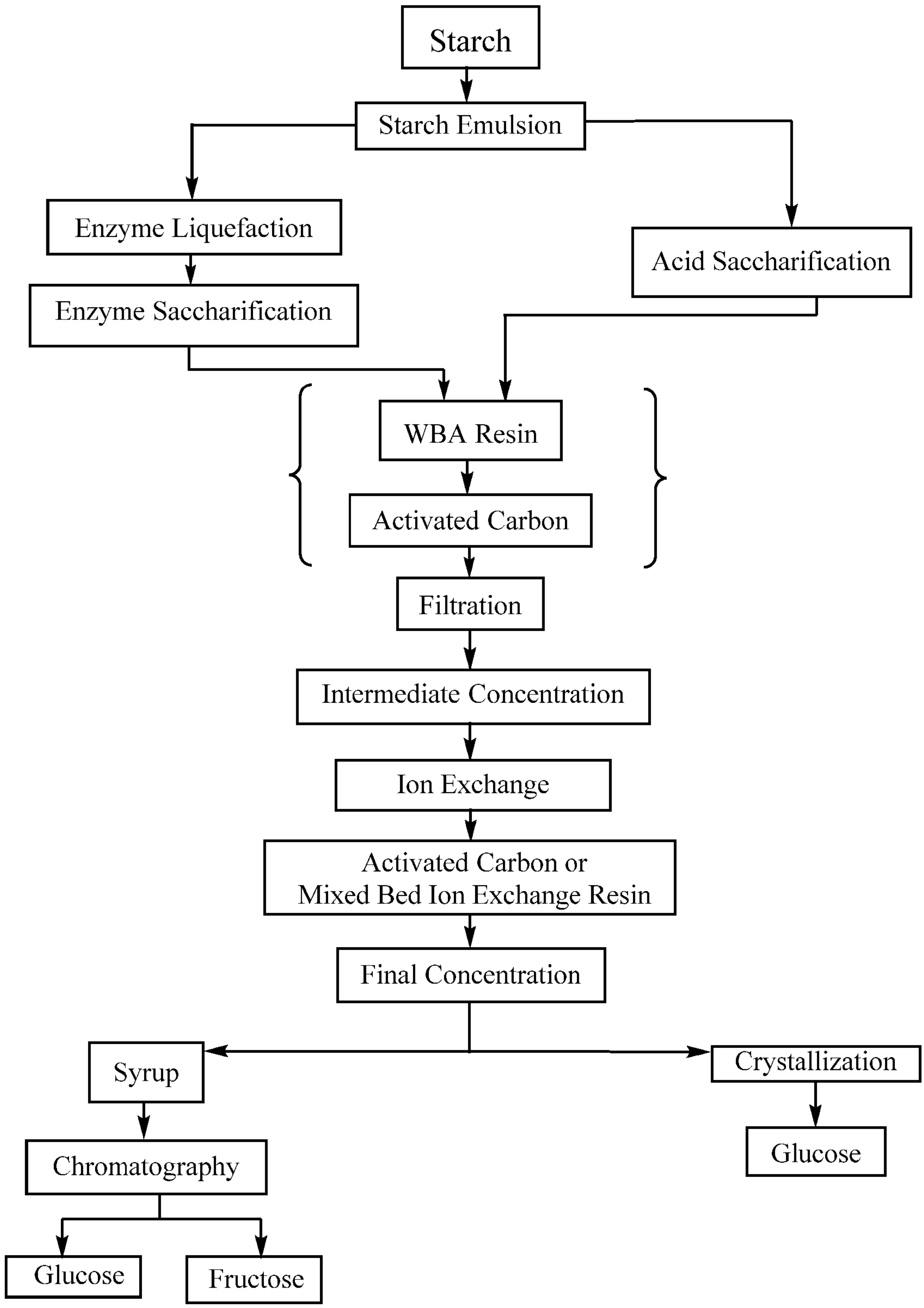
Starch
Starch Emulsion
Enzyme Liquefaction
Acid Saccharification
Enzyme Saccharification
WBA Resin
Activated Carbon
Filtration
Intermediate Concentration
Ion Exchange
Activated Carbon or
Mixed Bed Ion Exchange Resin
Final Concentration
Syrup
Crystallization
Chromatography
Glucose
Glucose
Fructose

Fig. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6942805 B
- US 4587953 A

### Non-patent literature cited in the description

- DOWEX™ MONOSPHERE™ 77 Ion Exchange Resin for Sweetener Applications. Dow Chemical Company